(19) Europäisches Patentamt
European Patent Office
Office européen des brevets

(11) **EP 4 648 365 A1**

(12) **EUROPEAN PATENT APPLICATION**
published in accordance with Art. 153(4) EPC

(43) Date of publication:
**12.11.2025 Bulletin 2025/46**

(21) Application number: **24744068.8**

(22) Date of filing: **02.01.2024**

(51) International Patent Classification (IPC):
**H04L 27/04** (2006.01)

(52) Cooperative Patent Classification (CPC):
**H04L 27/04; H04L 27/26**

(86) International application number:
**PCT/CN2024/070213**

(87) International publication number:
**WO 2024/152892 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.01.2023 CN 202310201145**

(71) Applicant: **Huawei Technologies Co., Ltd.
Shenzhen, Guangdong 518129 (CN)**

(72) Inventors:
• **QU, Weilin
Shenzhen, Guangdong 518129 (CN)**
• **WU, Yiling
Shenzhen, Guangdong 518129 (CN)**
• **JIN, Zhe
Shenzhen, Guangdong 518129 (CN)**
• **CHEN, Jun
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57)     This application provides a communication method and apparatus. The communication method includes: A transmit device uses different ZC sequences to represent a first OOK symbol ON and a second OOK symbol ON. The first OOK symbol ON and the second OOK symbol ON correspond to different ZC sequences, and are used as signal inputs before DFT in a DFT-s-OFDM generation procedure. According to the communication method provided in this application, flatness of a DFT-transformed frequency-domain signal can be improved. In this way, transmission performance of an OOK signal generated through DFT-s-OFDM on a frequency-selective channel is improved.

[FIG. 4]

S401 — Determine K first OOK symbols and K second OOK symbols

First OOK symbols — S402 — Mapping to a ZC sequence
Second OOK symbols — S406 — Mapping to a ZC sequence

S403 — N-point DFT
S407 — N-point DFT

S404 — M-point IFFT
S408 — M-point IFFT

S405 — First OFDM symbol
S409 — Second OFDM symbol

Send

Send

EP 4 648 365 A1

**Description**

CROSS-REFERENCE TO RELATED APPLICATIONS

This application claims priority to Patent Application No. 202310201145.7, filed with the China National Intellectual Property Administration on January 20, 2023 and entitled "COMMUNICATION METHOD AND APPARATUS", which is incorporated herein by reference in its entirety.

TECHNICAL FIELD

This application relates to the communication field, and more specifically, to a communication method and apparatus.

BACKGROUND

With increasingly wide application of 5G NR machine-type communication (Machine-Type Communication, MTC) and internet of things (Internet of Things, IoT) communication, a quantity of IoT device connections increases day by day. Therefore, the industry has an increasingly strong demand for reducing costs and power consumption of IoT devices. In the 4G era, 3GPP introduces an NB-IoT (Narrowband IoT) system, but an NB-IoT terminal still needs a battery for power supply and has a capability of generating a local high-frequency local oscillator carrier. Consequently, this type of terminals can only achieve power consumption at a milliwatt level. However, with evolution and development of 5G IoT, there is an increasing requirement for supporting a low-power terminal or a low-power terminal wake-up receiver in a 5G network. For example, in the 5G network, due to a constraint of low power consumption, the low-power terminal device or the low-power wake-up receiver can use only a low-accuracy low-power medium-to-low frequency ring oscillator or a completely local-oscillator-free manner to receive a downlink signal. This receiving manner can further reduce power consumption of the terminal device for downlink reception. However, in this low-power receiving manner, only amplitude demodulation such as envelope detection can be performed, because accurate demodulation of phase information of the signal cannot be ensured by using only the low-accuracy ring oscillator. Therefore, for the low-power terminal device or the low-power wake-up receiver, an OOK modulated waveform or an FSK modulated waveform for enabling envelope detection needs to be sent for downlink, so that the low-power terminal device can demodulate information, thereby implementing effective downlink communication.

In envelope detection (Envelope Detection), a received radio frequency signal or an intermediate frequency signal obtained by converting the radio frequency signal through a band-pass filter passes through a rectifier (rectifier diode) and then passes through a baseband low-pass filter, to obtain a baseband signal envelope for a modulated signal. Then, the obtained baseband envelope signal may be digitally sampled, and determined by a comparator, so that transmitted information bits can be demodulated. For OOK modulation, there is only one envelope detection. A terminal compares an energy value of a received signal envelope with a demodulation threshold, and performs determining. If the energy value is greater than the demodulation threshold, the terminal determines that a sent OOK modulated symbol is at a high level or the sent OOK modulated symbol is ON; or if the energy value is less than the demodulation threshold, the terminal determines that an OOK modulated symbol is at a low level or the OOK modulated symbol is OFF. For FSK modulation, there are a plurality of envelope detection. For example, for 2FSK, there are two envelope detection. A terminal obtains energy values of signal envelopes at two frequencies respectively, and compares the energy values of the signal envelopes at the two frequencies with each other. If the energy value of the first envelope is greater than the energy value of the second envelope, the terminal determines that a sent FSK modulated symbol is {1}; or if the energy value of the second envelope is greater than the energy value of the first envelope, the terminal determines that a sent FSK modulated symbol is {0}.

In the 5G network, to coexist with another sent NR signal and minimize interference to the another sent NR signal, a downlink signal sent to an ambient IoT terminal device also needs to be generated based on an NR (New Radio, new radio access technology) OFDM (Orthogonal Frequency Division Multiplexing, orthogonal frequency division multiplexing) system, to maintain orthogonality with a frequency-domain subcarrier of the another sent NR signal. Therefore, how to improve downlink signal transmission performance of the low-power terminal device or the low-power wake-up receiver while maintaining orthogonality of OFDM subcarriers is an urgent problem to be resolved.

SUMMARY

This application provides a communication method and apparatus, to improve receiving performance of a low-power terminal device.

According to a first aspect, a communication method is provided. The communication method may be performed by a transmit device, or may be performed by a chip or a circuit disposed in the transmit device. This is not limited in this application. For ease of description, the following uses an example in which the transmit device is a first apparatus for description.

The communication method includes:

The first apparatus determines K first OOK symbols and K second OOK symbols, where each of the K first OOK symbols and the K second OOK symbols is represented by S elements, the K first OOK symbols include K×S elements, and the K second OOK symbols include K×S elements; and 2K symbols composed of the K first OOK symbols and the K second OOK symbols include at least two OOK symbols ON, one of the two OOK symbols ON is represented by a first ZC sequence, the other of the two OOK symbols ON is represented by a second ZC sequence, and the first ZC sequence is different from the second ZC sequence.

The first apparatus performs N-point discrete Fourier transform DFT on the K×S elements included in the K first OOK symbols, to obtain N DFT-transformed first elements, where N=K×S.

The first apparatus maps the N DFT-transformed first elements to N frequency-domain subcarriers, to obtain a first frequency-domain signal mapped to the frequency-domain subcarriers. The first apparatus performs M-point inverse fast Fourier transform IFFT on the first frequency-domain signal, to obtain an IFFT-transformed first orthogonal frequency division multiplexing OFDM symbol, where M≥N.

The first apparatus sends the first OFDM symbol.

The first apparatus performs N-point DFT on the K×S elements included in the K second OOK symbols, to obtain N DFT-transformed second elements. The first apparatus maps the N DFT-transformed second elements to N frequency-domain subcarriers, to obtain a second frequency-domain signal mapped to the frequency-domain subcarriers. The first apparatus performs M-point IFFT on the second frequency-domain signal, to obtain an IFFT-transformed second OFDM symbol.

The first apparatus sends the second OFDM symbol.

Because a ZC sequence can ensure flatness of a DFT-transformed frequency-domain signal, that is, ensure a relatively low peak-to-average power ratio (peak-to-average power ratio, PAPR) of the frequency-domain signal, different ZC sequences are used for different modulated symbols ON, to further improve the flatness of the DFT-transformed frequency-domain signal, that is, to further reduce the peak-to-average power ratio (peak-to-average power ratio, PAPR) of the frequency-domain signal in a statistical sense within a period of time. In this way, transmission performance of an OOK signal on a frequency-selective channel is improved.

According to a second aspect, a communication method is provided. The method includes:

A first apparatus determines K first OOK symbols and K second OOK symbols, where each of the K first OOK symbols and the K second OOK symbols is represented by S elements, the K first OOK symbols include K×S elements, and the K second OOK symbols include K×S elements; and 2K symbols composed of the K first OOK symbols and the K second OOK symbols include at least two OOK symbols ON, one of the two OOK symbols ON is represented by a first ZC sequence, the other of the two OOK symbols ON is represented by a second ZC sequence, and the first ZC sequence is different from the second ZC sequence.

The first apparatus determines to perform N-point DFT on the K×S elements included in the K first OOK symbols, to obtain N DFT-transformed first elements, where N=K×S. The first apparatus determines to map the N DFT-transformed first elements to N frequency-domain subcarriers, to obtain a first frequency-domain signal mapped to the frequency-domain subcarriers. The first apparatus determines to perform M-point IFFT on the first frequency-domain signal, to obtain an IFFT-transformed first orthogonal frequency division multiplexing OFDM symbol, where M≥N. The first apparatus determines to send the first OFDM symbol to a second apparatus.

The first apparatus performs N-point discrete Fourier transform DFT on the K×S elements included in the K second OOK symbols, to obtain N DFT-transformed second elements. The first apparatus maps the N DFT-transformed second elements to N frequency-domain subcarriers, to obtain a second frequency-domain signal mapped to the frequency-domain subcarriers. The first apparatus performs M-point IFFT on the second frequency-domain signal, to obtain an IFFT-transformed second OFDM symbol. The first apparatus sends the second OFDM symbol to the second apparatus.

The second apparatus receives the first OFDM symbol and the second OFDM symbol.

According to a third aspect, a communication system is provided. The system includes: a first apparatus and a second apparatus.

The first apparatus is configured to:

determine K first OOK symbols and K second OOK symbols, where each of the K first OOK symbols and the K second OOK symbols is represented by S elements, the K first OOK symbols include K×S elements, and the K second OOK symbols include K×S elements; and 2K symbols composed of the K first OOK symbols and the K second OOK symbols include at least two OOK symbols ON, one of the two OOK symbols ON is represented by a first ZC sequence, the other of the two OOK symbols ON is represented by a second ZC sequence, and the first ZC sequence is different from the second ZC sequence;

perform N-point discrete Fourier transform DFT on the K×S elements included in the K first OOK symbols, to obtain N DFT-transformed first elements, where N=K×S;

map the N DFT-transformed first elements to N frequency-domain subcarriers, to obtain a first frequency-domain signal mapped to the frequency-domain subcarriers;

perform M-point inverse fast Fourier transform IFFT on the first frequency-domain signal, to obtain an IFFT-transformed first orthogonal frequency division multiplexing OFDM symbol, where M≥N; and

send the first OFDM symbol to the second apparatus.

The second apparatus is configured to:

receive the first OFDM symbol.

The first apparatus is further configured to:

perform N-point DFT on the K×S elements included in the K second OOK symbols, to obtain N DFT-transformed second elements;

map the N DFT-transformed second elements to N frequency-domain subcarriers, to obtain a second frequency-domain signal mapped to the frequency-domain subcarriers;

perform M-point IFFT on the second frequency-domain signal, to obtain an IFFT-transformed second OFDM symbol; and

send the second OFDM symbol to the second apparatus.

The second apparatus is further configured to:

receive the second OFDM symbol.

With reference to the first aspect to the third aspect, the following optional designs are further provided.

In an example, the two OOK symbols ON are respectively carried in the first OFDM symbol and the second OFDM symbol. Different ZC sequences are used for symbols ON in different OFDM symbols, to improve the flatness of the DFT-transformed frequency-domain signal in the statistical sense within the period of time. In this way, the transmission performance of the OOK signal on the fading frequency-selective channel is improved, and a signal spectrum template better meets a regulation requirement.

Alternatively, the two OOK symbols ON are carried in the first OFDM symbol.

In an example, that the first ZC sequence is different from the second ZC sequence includes:

The first ZC sequence and the second ZC sequence have different root indexes; or the first ZC sequence and the second ZC sequence have a same index but different cyclic shifts.

In an example, the first ZC sequence and the second ZC sequence have the same root index but different cyclic shifts, and the root index is equal to 1. A ZC sequence whose root index is equal to 1 is used. In this way, the flatness of the DFT-transformed frequency-domain signal can be improved, and flatness of a time-domain waveform of a time-domain symbol ON or symbol OFF can be better than flatness of a time-domain waveform of a symbol ON or a symbol OFF obtained by using a ZC sequence with another root index. This helps improve demodulation performance of a terminal, especially when there is a time-offset error, further improve demodulation performance of a receive end.

In an example, first Nzc elements in the first ZC sequence are a ZC sequence whose root index is u, and last (S-Nzc) elements in the first ZC sequence are first (S-Nzc) elements in the ZC sequence whose root index is u, where Nzc is a length of the ZC sequence whose root index is u, and Nzc<S.

In an example, the first ZC sequence is first S elements in a ZC sequence whose root index is u, where a length of the ZC sequence whose root index is u is Nzc, and Nzc>S.

Different truncation or padding manners of obtaining a ZC sequence are used, so that the flatness of the DFT-transformed frequency-domain signal can be improved, and the flatness of the time-domain waveform of the time-domain symbol ON or symbol OFF can be improved. This helps improve the demodulation performance of the terminal.

According to a fourth aspect, a communication method is provided. The communication method may be performed by a transmit device, or may be performed by a chip or a circuit disposed in the transmit device. This is not limited in this application. For ease of description, the following uses an example in which the transmit device is a first apparatus for description. The communication method includes:

The first apparatus determines K OOK symbols, where each of the K OOK symbols is represented by S same elements; and the K modulated symbols include T OOK symbols ON, the K OOK symbols include K×S elements, and the T OOK symbols ON include T×S elements.

The first apparatus multiplies an $i^{th}$ element in the T×S elements by $e^{j\alpha_i}$, to obtain K×S elements through multiplication, where $1 \leq i \leq T \times S$, $\alpha_i$ represents a phase, a value of $\alpha_i$ belongs to a set {P1, P2, ..., PL}, and L is a quantity of phases in the set. The first apparatus performs N-point DFT on the K×S elements obtained through multiplication, to obtain N DFT-transformed elements, where N=K×S. The first apparatus maps the N DFT-transformed elements to N frequency-domain subcarriers, to obtain a signal mapped to the frequency-domain subcarriers.

The first apparatus performs M-point IFFT on the signal mapped to the frequency-domain subcarriers, to obtain an IFFT-transformed OFDM symbol, where M≥N.

The first apparatus sends the IFFT-transformed OFDM symbol.

According to the communication method provided in this application, a random phase is multiplied on an OOK signal ON, so that randomness of a time-domain signal is improved, to improve flatness of a DFT-transformed frequency-domain signal. In this way, transmission performance of the OOK signal on a fading (Fading) frequency-selective channel is improved. A random selection manner of selecting a phase from a phase set is used, to further improve the flatness of the frequency-domain signal in a statistical sense within a period of time. In this way, a signal spectrum template can better meet a regulation requirement.

According to a fifth aspect, a communication method is provided. The communication method includes:

A first apparatus determines K OOK symbols, where each of the K OOK symbols is represented by S same elements; and the K modulated symbols include T OOK symbols ON, the K OOK symbols include K×S elements, and the T OOK symbols ON include T×S elements.

The first apparatus multiplies an $i^{th}$ element in the T×S elements by $e^{j\alpha_i}$, to obtain K×S elements through multiplication, where 1≤i≤T×S, $\alpha_i$ represents a phase, a value of $\alpha_i$ belongs to a set {P1, P2, ..., PL}, and L is a quantity of phases in the set.

The first apparatus performs N-point DFT on the K×S elements obtained through multiplication, to obtain N DFT-transformed elements, where N=K×S. The first apparatus maps the N DFT-transformed elements to N frequency-domain subcarriers, to obtain a signal mapped to the frequency-domain subcarriers. The first apparatus performs M-point IFFT on the signal mapped to the frequency-domain subcarriers, to obtain an IFFT-transformed OFDM symbol, where M≥N.

The first apparatus sends the OFDM symbol to a second apparatus.

The second apparatus receives the OFDM symbol.

According to a sixth aspect, a communication system is provided. The system includes:
a first apparatus and a second apparatus.

The first apparatus is configured to:

determine K OOK symbols, where each of the K OOK symbols is represented by S same elements; and the K modulated symbols include T OOK symbols ON, the K OOK symbols include K×S elements, and the T OOK symbols ON include T×S elements;

multiply an $i^{th}$ element in the T×S elements by $e^{j\alpha_i}$, to obtain K×S elements through multiplication, where 1≤i≤T×S, $\alpha_i$ represents a phase, a value of $\alpha_i$ belongs to a set {P1, P2, ..., PL}, and L is a quantity of phases in the set;

perform N-point DFT on the K×S elements obtained through multiplication, to obtain N DFT-transformed elements, where N=K×S;

map the N DFT-transformed elements to N frequency-domain subcarriers, to obtain a signal mapped to the frequency-domain subcarriers;

perform M-point IFFT on the signal mapped to the frequency-domain subcarriers, to obtain an IFFT-transformed OFDM symbol, where M≥N; and

send the OFDM symbol to the second apparatus.

The second apparatus is configured to:
receive the OFDM symbol.

With reference to the fourth aspect and the sixth aspect, the following optional designs are further provided.

In an example, in the set {P1, P2, ..., PL}, Pz=2π×(z-1)/L+c, where c is a fixed phase value, for example, c=0, z is an integer, and 1≤z≤L. The evenly distributed phase values are used, to optimize the flatness of the frequency-domain signal in the statistical sense within the period of time. In this way, the transmission performance of the OOK signal on the fading (Fading) channel is improved, and the signal spectrum template better meets the regulation requirement.

In an example, the set {P1, P2, ..., PL} corresponds to a phase set corresponding to PSK constellation points; or the set {P1, P2, ..., PL} corresponds to phases {+π/4, +3π/4, +5π/4, +7π/4} of quadrature amplitude modulation QAM constellation points. When an existing NR or LTE modulation constellation point is used as a value of a random phase set, an implementation change is relatively small, so that implementation costs can be reduced.

According to a seventh aspect, a communication apparatus is provided. The communication apparatus includes at least one processor. The at least one processor is coupled to at least one memory, and the at least one processor is configured to execute a computer program or instructions stored in the at least one memory, to enable the communication apparatus to perform a function of the first apparatus in the method described in the first aspect or the fourth aspect.

According to an eighth aspect, this application provides a computer-readable storage medium. The computer-readable storage medium stores instructions, and when the instructions are run on a computer, the computer is enabled to perform the methods in the foregoing aspects.

According to a ninth aspect, this application provides a computer program product including instructions. When the instructions are run on a computer, the computer is enabled to perform the methods in the foregoing aspects.

According to a tenth aspect, a chip apparatus is provided. The chip apparatus includes a processing circuit. The processing circuit is configured to: invoke a program from a memory and run the program, to enable a communication device in which the chip apparatus is installed to perform the method according to any one of the possible implementations of the first aspect and the fourth aspect.

BRIEF DESCRIPTION OF DRAWINGS

FIG. 1 is a diagram of a communication system to which this application is applicable;
FIG. 2 is a diagram of DFT-s-OFDM data processing;
FIG. 3 is a schematic flowchart of a communication method according to an embodiment of this application;
FIG. 4 is a schematic flowchart of another communication method according to an embodiment of this application;
FIG. 5 is a time-domain diagram of a first OFDM symbol and a second OFDM symbol according to an embodiment of this application;
FIG. 6 is a schematic flowchart of still another communication method according to an embodiment of this application;
FIG. 7 is a schematic flowchart of still another communication method according to an embodiment of this application;
FIG. 8 is a block diagram of an apparatus 800 according to an embodiment of this application; and
FIG. 9 is a block diagram of an apparatus 000 according to an embodiment of this application.

DESCRIPTION OF EMBODIMENTS

The following describes technical solutions of this application with reference to accompanying drawings.

The technical solutions in embodiments of this application may be applied to various communication systems, such as a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) system, an NR system, or a future network. The 5G mobile communication system in this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. The communication system may alternatively be a public land mobile network (public land mobile network, PLMN), a device-to-device (device-to-device, D2D) communication system, a machine-to-machine (machine-to-machine, M2M) communication system, an IoT communication system, or another communication system.

A terminal device (terminal equipment) in embodiments of this application may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), a terminal device in a future internet of vehicles, or the like. This is not limited in embodiments of this application.

As an example rather than a limitation, in embodiments of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an IoT system. For example, the terminal device may alternatively be a label, for example, an active label or a passive label. IoT is an important part of future information technology development. A main technical feature of the IoT is that an article is

EP 4 648 365 A1

connected to a network by using a communication technology, to implement an intelligent network of man-machine interconnection and interconnection between things. In embodiments of this application, the IoT technology can implement massive connections, deep coverage, and terminal power saving by using, for example, a narrowband (narrowband, NB) technology.

In addition, in embodiments of this application, the terminal device may further include a sensor, for example, an intelligent printer, a train detector, or a gas station. Main functions of the terminal device include collecting data (some terminal devices), receiving control information and downlink data of a network device, sending an electromagnetic wave, and transmitting uplink data to the network device.

The network device in embodiments of this application may be any communication device that has a wireless transceiver function and that is configured to communicate with the terminal device. The device includes but is not limited to: an evolved NodeB (evolved NodeB, eNB), a radio network controller (radio network controller, RNC), a NodeB (NodeB, NB), a home NodeB (home evolved NodeB, HeNB, or home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), a 5G system, for example, a gNB in an NR system, a transmission point (TRP or TP), one or a group of antenna panels (including a plurality of antenna panels) of a base station in a 5G system, or a network node that constitutes a gNB or a transmission point, for example, a baseband unit (BBU) or a distributed unit (distributed unit, DU). The network device may alternatively be a reader or the like.

In some deployments, the network device in embodiments of this application may be a central unit (central unit, CU) or a distributed unit (distributed unit, DU), or the network device includes a CU and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be further divided into a control plane central unit (central unit-control plane, CU-CP) and a user plane central unit (central unit-user plane, CU-UP). The CU-CP and the CU-UP may alternatively be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes an SDAP layer and a PDCP-U layer. The SDAP layer is mainly responsible for processing data of a core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an E1 interface). The CU-CP represents the network device and is connected to a core network device through a communication interface (for example, an Ng interface), and is connected to the DU through a communication interface (for example, an F1-C (control plane) interface). The CU-UP is connected to the DU through a communication interface (for example, an F1-U (user plane) interface).

In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application.

The network device mentioned in embodiments of this application may be a device including the CU or the DU, or a device including the CU and the DU, or a device including a control plane CU node (a CU-CP node), a user plane CU node (a CU-UP node), and the DU node.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to: a radio channel, and various other media that can store, include, and/or carry instructions and/or data.

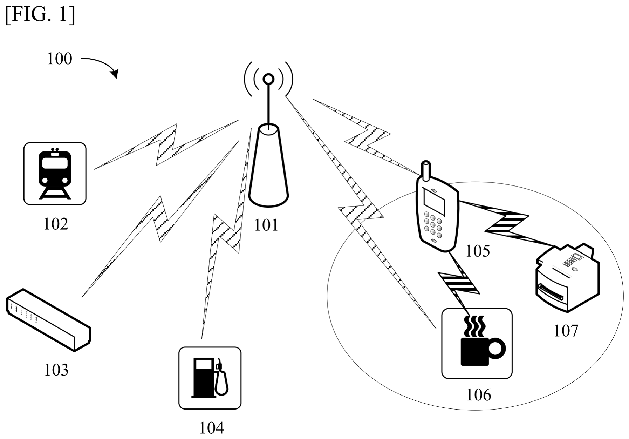

For ease of understanding embodiments of this application, a communication system shown in FIG. 1 is first used as an example to describe in detail a communication system applicable to embodiments of this application. As shown in FIG. 1, the communication system 100 may include at least one network device, for example, a network device 101 shown in FIG. 1. The communication system 100 may further include at least one terminal device, for example, terminal devices 102 to 107 shown in FIG. 1. The terminal devices 102 to 107 may be mobile or fixed. The network device 101 may communicate with one or more of the terminal devices 102 to 107 over a radio link. Each network device may provide communication coverage for a particular geographical area, and may communicate with a terminal device located in the coverage area.

Optionally, the terminal devices may directly communicate with each other. For example, direct communication between the terminal devices may be implemented by using a device to device (device to device, D2D) technology. As shown in FIG. 1, the terminal devices 105 and 106, and the terminal devices 105 and 107 may directly communicate with each other by using the D2D technology. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 through the terminal device 105.

A plurality of antennas may be disposed for each communication device. For each communication device in the communication system 100, the configured plurality of antennas may include at least one transmit antenna configured to send a signal and at least one receive antenna configured to receive a signal. Therefore, the communication devices in the communication system 100 may communicate with each other by using a multi-antenna technology.

For example, the terminal device in embodiments of this application is equipped with a low-power reception circuit for envelope detection. The reception circuit is configured to receive information. The communication system shown in FIG. 1 includes at least one terminal device equipped with a low-power reception circuit for envelope detection (for example, one or more of the terminal device 102 to the terminal device 107 is/are equipped with a low-power reception circuit for envelope detection).

Specifically, the terminal device equipped with the low-power reception circuit for envelope detection in embodiments of this application may be understood as an entity, on a user side, configured to receive or transmit a signal, for example, an industrial network sensor, a video surveillance camera, a wearable device (for example, a smartwatch), a water meter, a meter, and another terminal device having an auxiliary circuit.

It should be understood that FIG. 1 is only a simplified diagram of an example for ease of understanding. The communication system 100 may further include another network device or another terminal device, which is not shown in FIG. 1.

For ease of understanding of embodiments of this application, several basic concepts in embodiments of this application are briefly described. It should be understood that basic concepts described below are briefly described by using a basic concept specified in an NR protocol as an example, but embodiments of this application are not limited to being applied only to an NR system. Therefore, all standard names that appear when the NR system is used as an example for description are functional descriptions, and a specific name is not limited. The standard names indicate only functions of devices, and may be correspondingly extended to another system, for example, a system using an OFDM technology or a system using a technology similar to an OFDM technology.

1. Amplitude shift keying (amplitude shift keying, ASK)

If a possible state of a digital modulated signal is in a one-to-one correspondence with a binary information symbol or a corresponding baseband signal state of the binary information symbol, a modulated signal of the binary information symbol is referred to as a binary digital modulated signal. Keying performed by using the binary information symbol is referred to as binary amplitude shift keying, and is represented by ASK.

In a "binary amplitude shift keying" scheme, a carrier whose amplitude is A represents a bit "1", and a carrier on which shutdown is performed represents a bit 0. The reverse is also true.

ASK is a relatively simple modulation scheme, which is equivalent to amplitude modulation in analog signals. The only difference is that a carrier frequency signal is multiplied by a binary number. Amplitude shift is to use a frequency and a phase as constants and an amplitude as a variable. An information bit is transmitted by using a carrier amplitude.

2. On-off keying (On-Off Keying, OOK) modulation

OOK modulation is binary amplitude shift keying. OOK is a special example of ASK modulation. An OOK symbol whose amplitude (or envelope, level, energy, or the like) is high (for example, is higher than a threshold, or is non-zero) is referred to as an OOK symbol 1, an OOK symbol ON (ON), or an OOK symbol ON. An OOK symbol whose amplitude (or envelope, level, energy, or the like) is low (for example, is lower than a threshold, or is zero) is referred to as an OOK symbol 0, an OOK symbol OFF (OFF), or an OOK symbol OFF. Magnitude of an amplitude is defined relative to an amplitude demodulation threshold of a receiver. If the amplitude is greater than the demodulation threshold, the amplitude is high. If the amplitude is less than the demodulation threshold, the amplitude is low.

3. Phase shift keying (phase shift keying, PSK)

Phase shift keying is a modulation technology that uses a carrier phase to represent input signal information. Binary phase modulation is used as an example. When a symbol is "1", a modulated carrier and an unmodulated carrier are in a same phase. When a symbol is "0", a modulated carrier and an unmodulated carrier are in reverse phases. When a symbol is "1" and "0", a phase difference between a modulated carrier and an unmodulated carrier is 180°.

4. Quadrature amplitude modulation (quadrature amplitude modulation, QAM)

An amplitude and a phase change at the same time, which belongs to non-constant envelope two-dimensional modulation. QAM is a combination of a quadrature carrier modulation technology and multilevel amplitude keying.

Quadrature amplitude keying is a method of combining two amplitude modulated signals (ASK and PSK) into one channel. A quadrature amplitude modulated signal has two carriers of a same frequency but with a 90-degree phase difference. One signal is an I-channel signal, and the other signal is a Q-channel signal. Mathematically, one signal is represented as sine, and the other is represented as cosine. The two modulated carriers have been mixed during transmission. After arriving at a destination, the carriers are separated, and data is extracted separately and then mixed with original modulation information.

In QAM, two independent baseband signals are used to perform double sideband suppressed carrier modulation on the two mutually orthogonal intra-frequency carriers. Two-path parallel transmission of digital information is implemented by using orthogonality of spectrums of the modulated signals in a same bandwidth.

Common QAM includes binary phase shift keying (binary phase shift keying, BPSK), quadrature phase shift keying (quadrature phase shift keying, QPSK), 16QAM, 64QAM, and the like.

5. Constellation point

A modulated symbol of a modulation scheme is represented as a constellation point. One coordinate axis of a coordinate system of a modulated symbol is an I channel, and represents a coordinate of an I-channel signal. The other coordinate axis of the coordinate system is a Q channel, and represents a coordinate of a Q-channel signal. For example, in QSPK modulation, four modulated symbols are $\frac{1+j}{\sqrt{2}}$, $\frac{1-j}{\sqrt{2}}$, $\frac{-1+j}{\sqrt{2}}$, and $\frac{-1-j}{\sqrt{2}}$, where $j = \sqrt{-1}$. A constellation point $\frac{1+j}{\sqrt{2}}$ is used as an example. $\frac{1}{\sqrt{2}}$ is a Q-channel coordinate, and $\frac{j}{\sqrt{2}}$ is an I-channel coordinate.

## 6. Coherent demodulation

Coherent demodulation, also referred to as synchronous detection, is applicable to demodulation of all linearly modulated signals. A key to implementing coherent demodulation is that a receive end needs to restore a coherent carrier that is strictly synchronized with a modulated carrier. Coherent demodulation means inputting, by using a multiplier, a reference signal coherent with (in a same frequency and phase as) a carrier to be multiplied by the carrier.

## 7. Non-coherent demodulation

Compared with a coherent demodulation scheme, a non-coherent demodulation scheme used when a communication receive end recovers an original digital baseband signal from a modulated high-frequency signal is a demodulation scheme in which carrier information does not need to be extracted. Usually, a simple circuit is used in the non-coherent demodulation scheme, so that the non-coherent demodulation scheme is easy to be implemented. However, compared with the coherent demodulation scheme, the non-coherent demodulation scheme has a slight performance loss.

## 8. Envelope detection

Envelope detection is a signal detection method in which a high-frequency signal is used as an input signal to obtain an envelope or an amplitude line of a low-frequency original signal through a half-wave or full-wave rectifier circuit. Based on the obtained envelope of the original signal, a receiver performs digital sampling on the envelope of the original signal, compares the envelope with an amplitude or an energy threshold set by the receiver, and determines whether a transmitted signal is 1 or 0, that is, whether the signal is on or off (ON/OFF).

## 9. Frequency bands FR1 and FR2

According to the 3GPP protocol, two frequency bands: a frequency band FR1 and a frequency band FR2, are mainly used in a 5G network. A frequency range of the frequency band FR1 is 450 MHz to 6 GHz, and the frequency band FR1 is also referred to as a sub-6 GHz (sub-6 GHz) frequency band. A frequency range of the frequency band FR2 is 24.25 GHz to 52.6 GHz, and the frequency band FR2 is usually referred to as a millimeter wave (mmWave).

## 10. Sequence length

A sequence length in this application may be understood as a quantity of elements included in a sequence.

For example, if a sequence includes 12 elements, a length of the frequency-domain sequence is 12.

## 11. Discrete Fourier transform-spreading-orthogonal frequency division multiplexing (Discrete Fourier Transform-spreading-OFDM, DFT-s-OFDM)

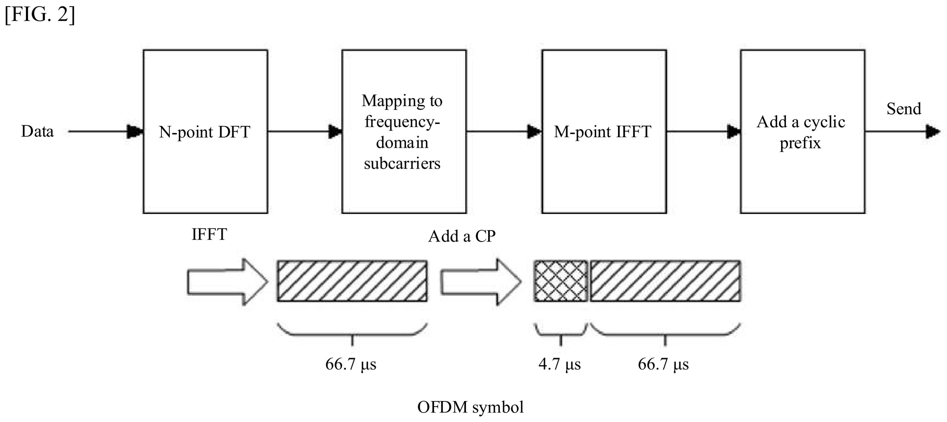

DFT-s-OFDM is shown in FIG. 2. In FIG. 2, N data symbols are input, and then N-point DFT is performed on the N data symbols. Output of N-point DFT is mapped to N subcarriers. M-point IFFT is performed on a mapped signal. A CP (Cyclic Prefix, cyclic prefix) is added to the IFFT-transformed signal, and then the signal is sent. DFT-s-OFDM is used for LTE and NR uplink transmission. Compared with OFDM, in DFT-s-OFDM, a peak-to-average power ratio (Peak-to-Average Power Ratio, PAPR) can be reduced. In addition, in a process of converting a DFT-s-OFDM time-domain signal into a frequency-domain signal and then mapping the frequency-domain signal to a time-domain signal, it is easy to generate a waveform in which one OFDM symbol carries a plurality of OOK symbols.

## 12. One OFDM symbol

As shown in FIG. 2, after IFFT, a symbol with a time-domain length of 66.7 $\mu$s (where $\mu$s represents microseconds) is output, and 4.7 $\mu$s is added to form a time-domain symbol with a time-domain length of 4.7+66.7 $\mu$s. Usually, a time-domain symbol added with a CP, for example, the time-domain symbol with a time-domain length of 4.7+66.7 $\mu$s shown in FIG. 2, is considered as one OFDM symbol. Alternatively, a symbol with a time-domain length of 66.7 $\mu$s that does not include a CP may be considered as one OFDM symbol. This is because at a receive end, a receiver removes the CP, and detects data by using the symbol with the time-domain length of 66.7 $\mu$s. In FIG. 2, a module for deleting N-point FFT is an OFDM generation process. Therefore, DFT-s-OFDM is also OFDM. Therefore, a symbol of DFT-s-OFDM in time domain is also an OFDM symbol.

13. ZC sequence (Zadoff-Chu sequence)

A ZC sequence is a sequence discovered by Zadoff and Chu together. The ZC sequence has a constant envelope feature, and is essentially an exponential sequence with a base number of e. Each sequence value in the sequence represents a point on a unit circle, and each point is only a phase change. An expression of the ZC sequence is defined as follows:

$$x_u(i) = e^{-j\frac{\pi u i(i+1)}{N_{ZC}}}, \text{where } i = 0, 1, 2, \dots, N_{ZC} - 1;$$

and

u is a root index of the ZC sequence, and $N_{ZC}$ is a length of an original ZC sequence.

For ease of understanding of embodiments of this application, the following descriptions are provided.

First, "first", "second", and various numeric numbers (for example, "#1" and "#2") shown in this application are merely for ease of description, and are for distinguishing between objects, but are not intended to limit the scope of embodiments of this application, for example, are used to distinguish between different messages, but are not for describing a particular order or sequence. It should be understood that the objects described in such a way are interchangeable in an appropriate circumstance, so that a solution other than embodiments of this application can be described.

Second, the term "and/or" in this application describes only an association relationship for describing associated objects and indicates that three relationships may exist. For example, A and/or B may indicate the following three cases: Only A exists, both A and B exist, and only B exists.

Without loss of generality, the following describes in detail the communication method provided in embodiments of this application by using interaction between a transmit device and a receive device as an example. For example, the transmit device is a network device, and the receive device is a terminal device. Alternatively, the transmit device may be understood as a first apparatus, and the receive device may be understood as a second apparatus.

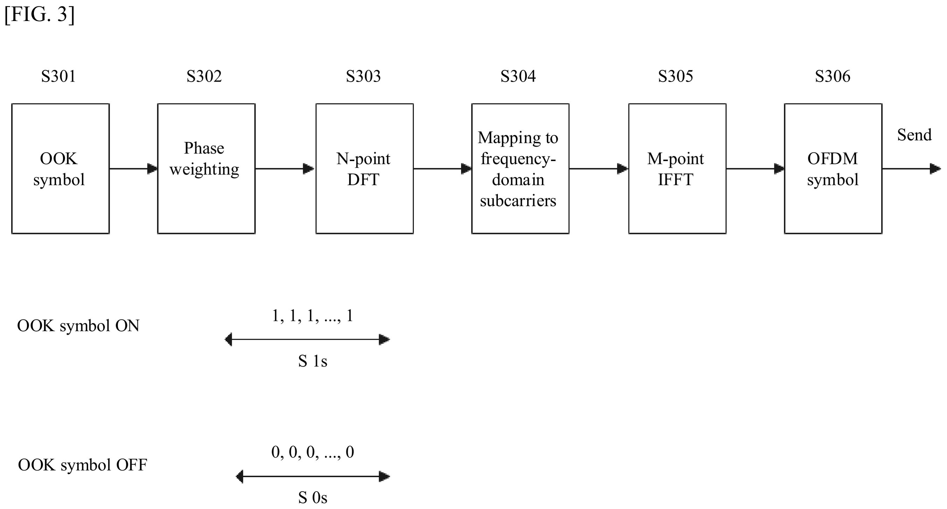

FIG. 3 is a schematic flowchart of a communication method according to an embodiment of this application.

The following steps are included.

S301: A transmit device determines K OOK symbols, where each of the K OOK symbols is represented by S same elements. For example, in FIG. 3, an OOK symbol ON is represented by S consecutive 1s, and an OOK modulated symbol OFF is represented by S consecutive 0s. In other words, if each of the K OOK symbols includes S elements, the K OOK symbols include K×S elements. For example, S=4, K=4, and the four OOK symbols are ON, OFF, OFF and ON. In this case, the four symbols are respectively represented as [1 1 1 1], [0 0 0 0], [0 0 0 0], and [1 1 1 1]. 1 may be represented by a high-level amplitude A, and 0 may be represented by a low-level amplitude B. A value of A may be 1, and a value of B may be 0. Alternatively, a value of A may be any one of PSK constellation points, or may be any one of QAM constellation points whose phases are {+π/4, +3π/4, +5π/4, +7π/4}.

The K modulated symbols include T OOK symbols ON, and in the foregoing example, T=2. The T OOK symbols ON include T×S elements, and in the foregoing example, T×S=8.

S302: The transmit device performs phase weighting on the T×S elements. To be specific, the transmit device multiplies an i<sup>th</sup> element in the T×S elements by $e^{j\alpha_i}$, to obtain K×S elements through multiplication, where $1 \le i \le T \times S$, $\alpha_i$ represents a phase, a value of $\alpha_i$ belongs to a phase set {P1, P2, ..., PL}, and L is a quantity of phases in the set. e is a natural constant, j is an imaginary part, and j is equal to a square root of -1. In an implementation, for each $\alpha_i$, a phase value may be randomly selected from the phase set. In an implementation, for each $\alpha_i$, a phase value may be selected from the phase set in a polling manner. For example, for $\alpha_i$, a phase value selected from the phase set is Pk, and for $\alpha_{i+1}$, a phase value selected from the phase set is Pk+1.

A random phase is multiplied on an OOK signal ON, so that randomness of a time-domain signal is improved, to improve flatness of a DFT-transformed frequency-domain signal, that is, to further reduce a peak-to-average power ratio (peak-to-average power ratio, PAPR) of the frequency-domain signal in a statistical sense within a period of time. In this way, transmission performance of the OOK signal on a fading (Fading) frequency-selective channel is improved.

A random selection manner of selecting a phase from the phase set is used, to further improve the flatness of the frequency-domain signal in the statistical sense within the period of time. In this way, a signal spectrum template can better meet a regulation requirement.

In an example, phases in the phase set {P1, P2, ..., PL} to which the value of $\alpha_i$ belongs are evenly distributed, that is, Pz=2π×(z-1)/L+c, where c is a constant, z is an integer, and 1≤z≤L. The evenly distributed phase values are used, to optimize the flatness of the frequency-domain signal in the statistical sense within the period of time, that is, to further reduce the peak-to-average power ratio (peak-to-average power ratio, PAPR) of the frequency-domain signal in the statistical sense within the period of time. In this way, the transmission performance of the OOK signal on the fading (Fading) channel is improved, and the signal spectrum template better meets the regulation requirement.

Pz may be a constellation point of a phase shift keying (phase shift keying, PSK) phase. For example, Pz is a constellation point of a quadrature phase shift keying (quadrature phase shift keying, QPSK) phase. In this case, L=4, and c=0. The phase set includes four phase values $\{0, +\pi/2, +\pi, -\pi/2\}$. For example, Pz is a constellation point of a binary phase shift keying (binary phase shift keying, BPSK) phase. In this case, L=2, and c=0 or $+\pi/2$. If c=0, the phase set includes two phase values $\{0, +\pi\}$. If $c=+\pi/4$, Pz is also referred to as a constellation point of a $\pi/2$-BPSK phase, and the phase set includes two phase values $\{+\pi/4, +3\pi/4\}$. For example, Pz is a constellation point of a quadrature amplitude modulation (Quadrature Amplitude Modulation, QAM) phase. In this case, L=4, and $c=+\pi/4$. Phase values in a phase set of constellation points of QAM phases are the same as phase values in a phase set of constellation points of QPSK phases. In this case, in the phase set, the phase set of the corresponding QAM modulation constellation points includes four phase values $\{+\pi/4, +3\pi/4, +5\pi/4, +7\pi/4\}$. The selected QAM constellation points may be four constellation points that have a same modulus value and that correspond to the four phase values in the phase set. When an existing NR or LTE modulation constellation point is used as a value of a random phase set, an implementation change is relatively small, so that implementation costs can be reduced.

The $i^{th}$ element in the T×S elements is multiplied by $e^{j\alpha_i}$ in the following manners, to obtain the K×S elements through multiplication.

Manner 1:

Phase weighting is not performed on (K-T)×S elements included in (K-T) OOK symbols OFF. For example, S=4, and K=4. The K×S elements obtained through multiplication are $[Ae^{j\alpha_1} Ae^{j\alpha_2} Ae^{j\alpha_3} Ae^{j\alpha_4}]$, [B B B B], [B B B B], and $[Ae^{j\alpha_5} Ae^{j\alpha_6} Ae^{j\alpha_7} Ae^{j\alpha_8}]$.

Manner 2:

Phase weighting is also performed on (K-T)×S elements included in (K-T) OOK symbols OFF. For example, for any one of the (K-T)×S elements, a phase value is randomly selected from the phase set for phase weighting.

For example, S=4, and K=4. The K×S elements obtained through multiplication are $[A e^{j\alpha_1} Ae^{j\alpha_2} Ae^{j\alpha_3} Ae^{j\alpha_4}]$, $[Be^{j\alpha_9} Be^{j\alpha_{10}} Be^{j\alpha_{11}} Be^{j\alpha_{12}}]$, $[Be^{j\alpha_{13}} Be^{j\alpha_{14}} Be^{j\alpha_{15}} B e^{j\alpha_{16}}]$, and $[Ae^{j\alpha_5} Ae^{j\alpha_6} Ae^{j\alpha_7} Ae^{j\alpha_8}]$. For example, A=1, and B=0. The K×S=16 elements obtained through multiplication are $[e^{j\alpha_1} e^{j\alpha_2} e^{j\alpha_3} e^{j\alpha_4}]$, [0 0 0 0], [0 0 0 0], and $[e^{j\alpha_5} e^{j\alpha_6} e^{j\alpha_7} e^{j\alpha_8}]$. In addition, a value of any one of $\alpha_1$ to $\alpha_8$ is one of {P1, P2, ..., PL}.

S303: The transmit device performs N-point DFT on the K×S elements through multiplication, to obtain N DFT-transformed elements, where N=K×S. In the foregoing example, the K×S=16 elements may be used as a sequence $[Ae^{j\alpha_1} Ae^{j\alpha_2} Ae^{j\alpha_3} Ae^{j\alpha_4} 0 0 0 0 0 0 0 0 Ae^{j\alpha_5} Ae^{j\alpha_6} Ae^{j\alpha_7} Ae^{j\alpha_8}]$ whose length is 16. 16-point DFT is performed on the sequence whose length is 16, to obtain 16 16-point-DFT-transformed elements. The N=16 DFT-transformed elements are denoted as a1, a2, ..., and a16.

S304: The transmit device maps the N DFT-transformed elements to N frequency-domain subcarriers, to obtain a signal mapped to the frequency-domain subcarriers. For example, a frequency-domain bandwidth includes M subcarriers, where M≥N. Mapping the N DFT-transformed elements to the N frequency-domain subcarriers is mapping the N elements to N subcarriers in the M subcarriers. For example, M=64. The 64 subcarriers are respectively represented as c1, c2, ..., and c64 in ascending order in frequency domain. a1, a2, ..., and a16 are respectively carried on c25, c28, ..., and c40. Other subcarriers are mapped to 0, which is also referred to as zero padding.

The signal mapped to the frequency-domain subcarriers is a sequence S={0, ..., 0 (24 0s), a1, a2, ..., a16, 0, ..., 0 (24 0s)}.

S305: The transmit device performs M-point IFFT on the signal mapped to the frequency-domain subcarriers, to obtain an IFFT-transformed OFDM symbol, where M≥N.

The transmit device performs 64-point IFFT on the signal mapped to the frequency-domain subcarriers, namely, the sequence S={0, ..., 0 (24 0s), a1, a2, ..., al6, 0, ..., 0 (24 0s)}, to obtain a sequence D={d1, d2, ..., d64} of 64 time-domain sampling points. A cyclic prefix is added to the sampling point sequence D, to obtain an IFFT-transformed OFDM symbol.

S306: Send the IFFT-transformed OFDM symbols. Correspondingly, a receive device receives the OFDM symbol.

S303 to S306 are similar to steps of DFT-s-OFDM in FIG. 2. Therefore, the OFDM symbol is also considered as a DFT-s-OFDM symbol.

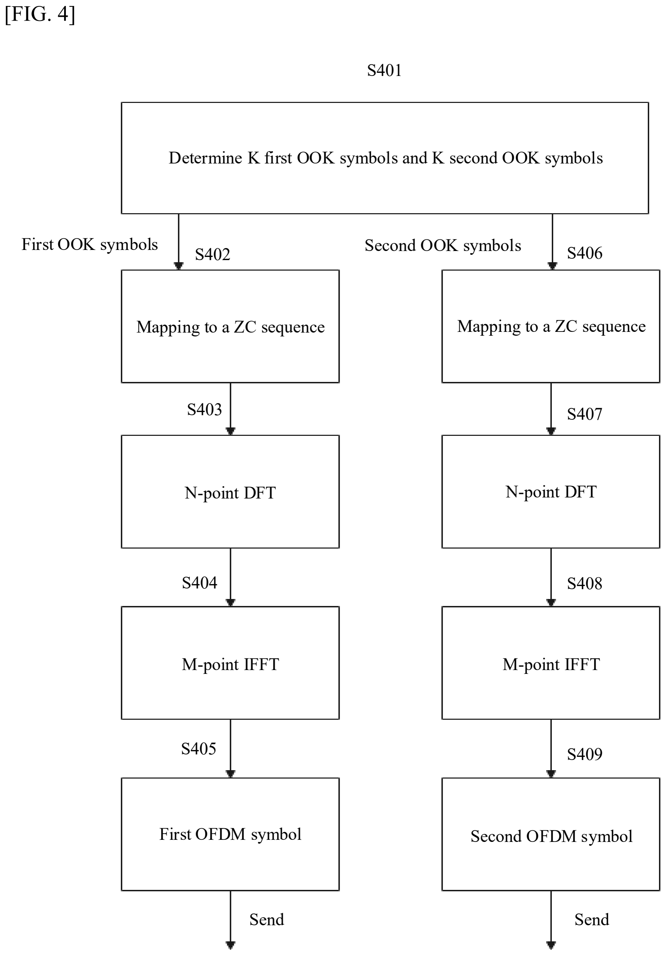

FIG. 4 is a schematic flowchart of a communication method according to an embodiment of this application.

The following steps are included.

S401: A transmit device determines K first OOK symbols and K second OOK symbols, where the K first OOK symbols are carried in a first OFDM symbol, and the K second OOK symbols are carried in a second OFDM symbol; each of the K first OOK symbols and the K second OOK symbols is represented by S elements, the K first OOK symbols include K×S elements, and the K second OOK symbols include K×S elements; for the transmit device determining the K first OOK symbols and the K second OOK symbols, the transmit end needs to determine the K first OOK symbols before sending the first OFDM symbol, and determine the K second OOK symbols before sending the second OFDM symbol; and others are not limited.

S402: The transmit device maps the K first OOK symbols to a ZC sequence.

A sequence corresponding to an OOK symbol ON is a ZC sequence, and a sequence corresponding to an OOK symbol OFF is an all-zero sequence. In other words, the OOK symbol ON is represented by the ZC sequence, where one ZC sequence includes S elements; and the OOK symbol OFF is represented by S 0s.

2K symbols composed of the K first OOK symbols and the K second OOK symbols include at least two OOK symbols ON, one of the two OOK symbols ON is represented by a first ZC sequence, the other of the two OOK symbols ON is represented by a second ZC sequence, and the first ZC sequence is different from the second ZC sequence. That is, different symbols ON may correspond to different ZC sequences.

Because a ZC sequence can ensure flatness of a DFT-transformed frequency-domain signal, different ZC sequences are used for different modulated symbols ON, to further improve the flatness of the DFT-transformed frequency-domain signal, that is, to further reduce a peak-to-average power ratio (peak-to-average power ratio, PAPR) of the frequency-domain signal. In this way, transmission performance of an OOK signal on a frequency-selective channel is improved.

That the first ZC sequence is different from the second ZC sequence may be understood as at least one of the following cases:

The first ZC sequence and the second ZC sequence have different root indexes; or

the first ZC sequence and the second ZC sequence have a same root index but different cyclic shifts.

A sequence may be cyclically shifted to form another sequence. For example, a sequence 1: q(1), q(2), ..., q(S) is cyclically shifted to the left by two positions, to obtain a sequence 2: q(3), q(4), ..., q(S), ..., q(1), q(2). The sequence 1 and the sequence 2 are two different sequences. If a left cyclic shift is defined as negative and a right cyclic shift is defined as positive, a cyclic shift of the sequence 1 is 0, and a cyclic shift of the sequence 2 is -2.

For a ZC sequence corresponding to an OOK symbol ON, a ZC sequence set may be defined. The transmit device randomly selects a ZC sequence from the ZC sequence set as the ZC sequence corresponding to the modulated symbol ON. For example, when different ZC sequences are distinguished by using root indexes, the ZC sequence set includes a plurality of ZC sequences having different root indexes; or when different ZC sequences are distinguished by using cyclic shifts, the ZC sequence set includes a plurality of ZC sequences having a same root index but different cyclic shift values. For example, the ZC sequence set includes a plurality of cyclic shift values 0 to Nzc-1, where Nzc is a length of a ZC sequence.

A quantity N of subcarriers occupied by an OOK signal is usually an integer multiple of 12. A quantity of elements included in a sequence corresponding to an OOK symbol ON or OFF is usually an integer multiple of 6, for example, 6 or 12. However, a value of a sequence length Nzc of an original ZC sequence whose root index is u is usually a prime number, for example, 5, 7, 11, or 13. A length of a ZC sequence may be understood as a quantity of elements included in the ZC sequence. Therefore, a quantity of elements included in a ZC sequence corresponding to an OOK symbol ON may be different from a quantity of elements included in an original ZC sequence.

In the following methods, a ZC sequence corresponding to an OOK symbol ON, namely, the first ZC sequence or the second ZC sequence, may be obtained from the ZC sequence whose root index is u. The following uses the first sequence as an example for description.

First, it is assumed that a length of the ZC sequence whose root index is u is Nzc.

Method 1: First Nzc elements in the first ZC sequence are the ZC sequence corresponding to the root index u, and last (S-Nzc) elements in the first ZC sequence are first (S-Nzc) elements in the ZC sequence corresponding to the root index u. Another description of Method 1 is as follows: Assuming that the ZC sequence corresponding to the root index u is q(1), q(2), ..., q(Nzc), the first ZC sequence is q(1), q(2), ..., q(Nzc), q(1), q(2), ..., q(S-Nzc). Method 1 may also be referred to as a cyclic shift-based padding method.

Method 2: Nzc>S. The first ZC sequence is first S elements in the ZC sequence corresponding to the root index u. That is, the first ZC sequence is q(1), q(2), ..., q(S). Alternatively, the first ZC sequence is last S elements in the ZC sequence corresponding to the root index u. That is, the first ZC sequence is q(Nzc-S+1), q(Nzc-S+2), ..., q(Nzc). Alternatively, the first ZC sequence is S elements randomly selected from the ZC sequence corresponding to the root sequence number u.

Method 3: Nzc<S. Nzc elements in the first ZC sequence are the ZC sequence corresponding to the root index u, and remaining (S-Nzc) elements in the first ZC sequence are (S-Nzc) elements randomly selected from the ZC sequence corresponding to the root index u.

Method 4: The K first OOK symbols include T OOK symbols ON, the T OOK symbols ON include a total of T×S elements, and all the T×S elements form the first ZC sequence. When Nzc<T×S, a third ZC sequence whose length is T×S is generated with reference to Method 1 (where S in Method 1 is replaced with T×S), or a third ZC sequence whose length is T×S is generated with reference to Method 3 (where S in Method 3 is replaced with T×S); or when Nzc>T×S, a third ZC sequence whose length is $T \times S$ is generated with reference to Method 2 (where S in Method 2 is replaced with $T \times S$). The elements in the first ZC sequence correspond to elements corresponding to any one of T OOK symbols ON in the third ZC sequence, that is, the elements in the first ZC sequence correspond to an $((i-1) \times S+1)^{th}$ element to an $(i \times S)^{th}$ element in the third sequence, where i is greater than or equal to 1, and less than or equal to T.

Method 5: The K first OOK symbols include a total of $K \times S$ elements, and all the $K \times S$ elements form a fourth ZC sequence. When $Nzc < K \times S$, a fourth ZC sequence whose length is $K \times S$ is generated with reference to Method 1 (where S in Method 1 is replaced with $K \times S$), or a fourth ZC sequence whose length is $K \times S$ is generated with reference to Method 3 (where S in Method 1 is replaced with $K \times S$); or when $Nzc > K \times S$, a fourth ZC sequence whose length is $K \times S$ is generated with reference to Method 2 (where S in Method 2 is replaced with $K \times S$).

The K first OOK symbols include T OOK symbols ON and (K-T) OOK symbols OFF. In the fourth ZC sequence, $(K-T) \times S$ elements corresponding to the OOK symbols OFF are set to 0, and $T \times S$ elements in remaining T symbols ON form a fifth ZC sequence. The elements in the first ZC sequence correspond to elements corresponding to any one of T OOK symbols ON in the fifth ZC sequence, that is, the elements in the first ZC sequence correspond to an $((i-1) \times S+1)^{th}$ element to an $(i \times S)^{th}$ element in the fifth sequence, where i is greater than or equal to 1, and less than or equal to T.

In an example, the root index u of the first ZC sequence is equal to 1, or the root index u of the second ZC sequence is equal to 1, or both the root index of the first ZC sequence and the root index of the second ZC sequence are 1. The ZC sequence whose root index is equal to 1 is used. In this way, the flatness of the DFT-transformed frequency-domain signal can be improved, and flatness of a time-domain waveform of a time-domain symbol ON or symbol OFF can be better than flatness of a time-domain waveform of a symbol ON or a symbol OFF obtained by using a ZC sequence with another root index. This helps improve demodulation performance of a terminal, especially when there is a time-offset error, further improve demodulation performance of a receive end.

S403: The transmit device performs N-point DFT on the K first OOK symbols. To be specific, N-point DFT is performed on the $K \times S$ elements included in the K first OOK symbols, to obtain N DFT-transformed first elements, where $N=K \times S$.

S404: The transmit device performs M-point IFFT. To be specific, the transmit device maps the N DFT-transformed first elements to N frequency-domain subcarriers, to obtain a first frequency-domain signal mapped to the frequency-domain subcarriers. Then, the transmit device performs M-point IFFT on the first frequency-domain signal, to obtain an IFFT-transformed first OFDM symbol, where $M \geq N$.

S405: Send the first OFDM symbol. Correspondingly, the receive device receives the first OFDM symbol.

S406: The transmit device maps the K second OOK symbols to a ZC sequence.

S407: The transmit device performs N-point DFT on the K second OOK symbols. To be specific, N-point DFT is performed on the $K \times S$ elements included in the K second OOK symbols, to obtain N DFT-transformed second elements, where $N=K \times S$.

S408: The transmit device performs M-point IFFT. To be specific, the transmit device maps the N DFT-transformed second elements to N frequency-domain subcarriers, to obtain a second frequency-domain signal mapped to the frequency-domain subcarriers. Then, the transmit device performs M-point IFFT on the second frequency-domain signal, to obtain an IFFT-transformed second OFDM symbol, where $M \geq N$.

S409: Send the second OFDM symbol. Correspondingly, the receive device receives the second OFDM symbol.

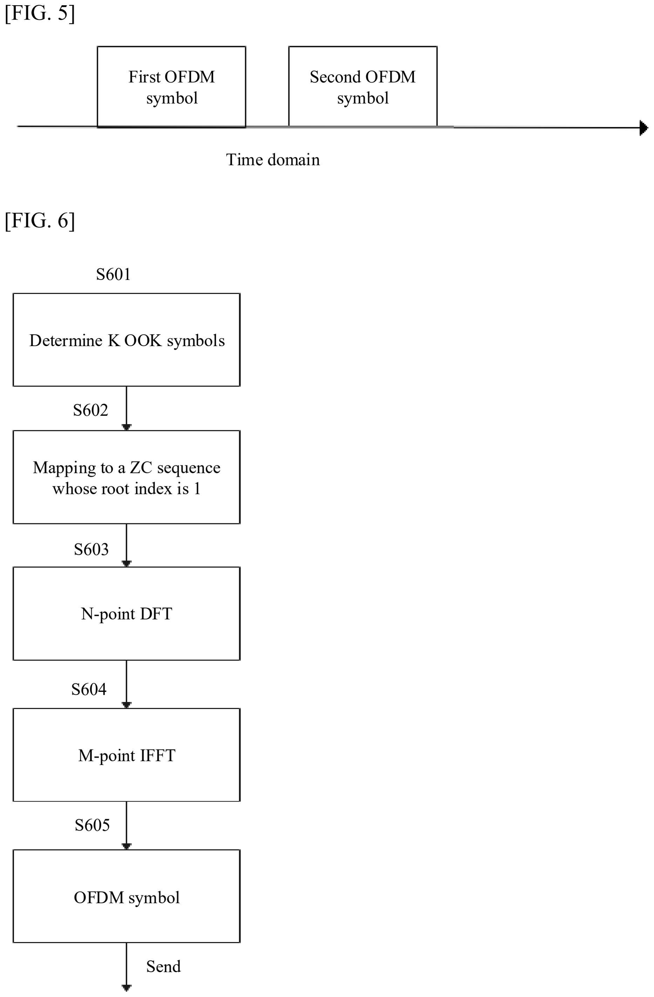

The first OFDM symbol and the second OFDM symbol may also be referred to as DFT-s-OFDM symbols. FIG. 5 is a diagram of a first OFDM symbol and a second OFDM symbol.

In an example, a first OOK symbol ON and a second OOK symbol ON are respectively carried in the first OFDM symbol and the second OFDM symbol. For example, OOK symbols ON in a same OFDM symbol correspond to a same ZC sequence, but OOK symbols ON in different OFDM symbols correspond to different ZC sequences. For example, assuming that Nzc=31 and S=4, the OOK symbol ON in the first OFDM symbol corresponds to first four elements q(1), q(2), q(3), and q(4) in a ZC sequence whose root index u is equal to 1 and whose shift is 0, and the OOK symbol ON in the second OFDM symbol corresponds to first four elements q(2), q(3), q(4), and q(5) in a ZC sequence whose root index u is equal to 1 and whose shift is 1. Different ZC sequences are used for OOK symbols ON in different OFDM symbols, to improve flatness of a DFT-transformed frequency-domain signal in a statistical sense within a period of time, that is, to further reduce a peak-to-average power ratio (peak-to-average power ratio, PAPR) of the frequency-domain signal in the statistical sense within the period of time. In this way, transmission performance of an OOK signal on a fading frequency-selective channel is improved, and a signal spectrum template better meets a regulation requirement.

In another example, a first OOK symbol ON and a second OOK symbol ON are carried in the first OFDM symbol. In this case, different OOK symbols ON in one OFDM symbol may correspond to different ZC sequences. For example, there are three OOK symbols ON in one OFDM symbol, and the three OOK symbols ON are respectively represented as symbols 1, 2, and 3. The three symbols correspond to different ZC sequences. Alternatively, a ZC sequence corresponding to the symbols 1 and 2 is a sequence 1, and a ZC sequence corresponding to the symbol 3 is a sequence 2.

FIG. 6 is a schematic flowchart of a communication method according to an embodiment of this application based on FIG. 4.

In FIG. 6, the following steps are included.

S601: A transmit device determines K OOK symbols, where each of the K OOK symbols is represented by S elements, and the K first OOK symbols include K×S elements.

S602: The transmit device maps the K OOK symbols to a ZC sequence whose root index is 1. Refer to S402. A sequence corresponding to an OOK symbol ON is a ZC sequence, and a sequence corresponding to an OOK symbol OFF is an all-zero sequence. For a manner of obtaining ZC sequences corresponding to all OOK symbols ON in the K OOK symbols, refer to descriptions in FIG. 4. Details are not described again.

S603: N-point DFT; S604: M-point IFFT; and S605: Send an OFDM symbol are respectively similar to S403, S404, and S405 in FIG. 4. Details are not described again.

S602a is a step used to replace S602. The transmit device maps the K OOK symbols to a ZC sequence whose root index is u. Refer to S402. A sequence corresponding to an OOK symbol ON is a ZC sequence, and a sequence corresponding to an OOK symbol OFF is an all-zero sequence. For a manner of obtaining ZC sequences corresponding to all OOK symbols ON in the K OOK symbols, refer to descriptions in FIG. 4. Details are not described again. A difference between S602a and S602 is that, in this step, it is not limited that the root index u of the ZC sequence is definitely equal to 1, and u may be 1 or another value.

For example, for a method of obtaining a ZC sequence, refer to Method 1 to Method 5 in FIG. 4.

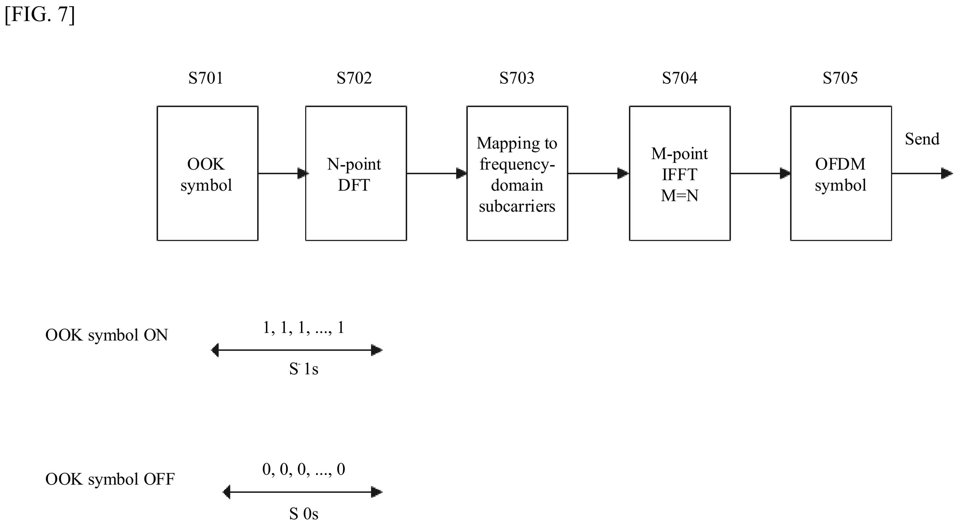

FIG. 7 is a schematic flowchart of a communication method according to an embodiment of this application based on FIG. 3.

Because FIG. 7 is similar to FIG. 3, the following mainly describes a difference between FIG. 7 and FIG. 3. For other descriptions, refer to descriptions in FIG. 3.

Differences between FIG. 7 and FIG. 3 are as follows:

First point: FIG. 7 does not include a phase weighting step. In other words, when all phases in phase weighting in FIG. 3 are 0, FIG. 3 is equivalent to FIG. 7.

Second point: In FIG. 3, M=N.

In FIG. 7, the following steps are included.

S701: S701 is similar to S301. A transmit device determines K OOK symbols, where each of the K OOK symbols is represented by S same elements. For example, in FIG. 7, an OOK modulated symbol ON is represented by S consecutive 1s, and an OOK symbol OFF is represented by S consecutive 0s. In other words, if each of the K OOK modulated symbols includes S elements, the K OOK modulated symbols include K×S elements. For example, S=16, K=4, and the four OOK modulated symbols are ON, OFF, OFF and ON. In this case, the four symbols are respectively represented as [1 1 ... 1], [0 0 ... 0], [0 0 ... 0], and [1 1 ... 1]. 1 may be represented by a high-level amplitude A, and 0 may be represented by a low-level amplitude B. A value of A may be 1, and B may be 0. Alternatively, a value of A may be any one of PSK constellation points, or may be any one of QAM constellation points whose phases are $\{+\pi/4, +3\pi/4, +5\pi/4, +7\pi/4\}$.

S702: S701 is similar to S303. In S702, N=64, an example in which the value of A is 1 and the value of B is 0 is used, and K×S=64 elements are used as a sequence [1 1 ... 1 0 0 ... 0 1 1 ... 1 0 0 ... 0] whose length is 64. 64-point DFT is performed on the sequence whose length is 64, to obtain 64 64-point-DFT-transformed elements. The N=64 DFT-transformed elements are denoted as a1, a2, ..., and a64.

S703: S702 is similar to S304. However, in S702, the transmit device maps the N DFT-transformed elements to the N frequency-domain subcarriers. A specific implementation is as follows: A frequency-domain bandwidth includes M subcarriers, where M=N. X central elements are obtained from the N DFT-transformed elements, and values of remaining (N-X) elements are set to 0, where X≤N. For example, M=N=64, X=16, the N DFT-transformed elements are denoted as a1, a2, ..., and a64, the central X elements are a25, a28, ..., and a40, and the remaining (N-X) elements are set to 0. The obtained N elements are mapped to the M subcarriers (where M=N). For example, the 64 subcarriers are respectively represented as c1, c2, ..., and c64 in ascending order in frequency domain. The X elements a25, a26, ..., and a40 are respectively carried in c25, c28, ..., and c40.

S704: S704 is similar to S305. Reference is made to descriptions of S305. However, in S704, M=N.

For other descriptions of FIG. 7, refer to descriptions of FIG. 3. Details are not described again.

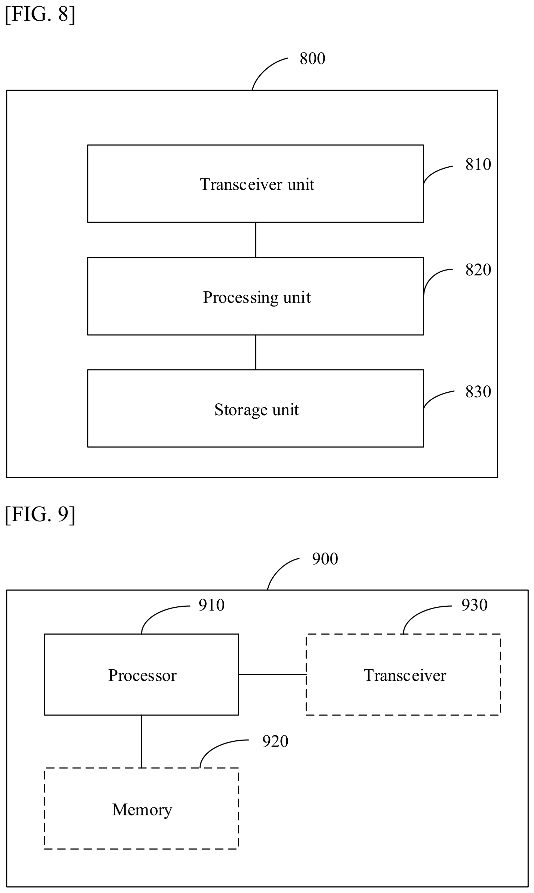

The following describes in detail communication apparatuses provided in embodiments of this application with reference to FIG. 8 and FIG. 9. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, functional modules of a transmit device or a receive device may be obtained through division based on the foregoing method examples. For example, functional modules may be obtained through division based on functions, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

FIG. 8 is a block diagram of an apparatus 800 according to an embodiment of this application. The apparatus 800 includes a transceiver unit 810, a processing unit 820, and a storage unit 830. The transceiver unit 810 may implement a corresponding communication function, and the transceiver unit 810 may also be referred to as a communication interface or a communication unit. The processing unit 820 is configured to process data. The storage unit 830 is configured to store instructions and/or data, and the processing unit 820 may read the instructions and/or the data in the storage unit, to enable the apparatus to implement the foregoing method embodiments.

The apparatus 800 may be configured to perform an action performed by a device (for example, the foregoing transmit device or receive device) in the foregoing method embodiments. In this case, the apparatus 800 may be the device or a component that may be configured in the device. The transceiver unit 810 is configured to perform operations related to receiving and sending of the device in the foregoing method embodiments. The processing unit 820 is configured to perform a processing related operation of the device in the foregoing method embodiments.

In a design, the apparatus 800 is configured to perform an action performed by the transmit device in the foregoing method embodiments.

The processing unit 820 is configured to: determine K first OOK symbols and K second OOK symbols; perform N-point DFT; perform frequency-domain subcarrier mapping, perform IFFT; perform phase weighting; and the like.

The transceiver unit 810 is configured to send an OFDM symbol to a receive device.

For descriptions of the first OOK symbols, the second OOK symbols, and the like, refer to the method embodiments.

The apparatus 800 may implement a step or a procedure performed by the transmit device in the method embodiments according to embodiments of this application. The apparatus 800 may include a unit configured to perform the method performed by the transmit device in the method embodiments. In addition, the units in the apparatus 800 and the foregoing other operations and/or functions are separately used to implement corresponding procedures in the method embodiments of the transmit device in the method embodiments.

As shown in FIG. 9, an embodiment of this application further provides an apparatus 900. The apparatus 900 includes a processor 910, and may further include one or more memories 920.

The processor 910 is coupled to the memory 920. The memory 920 is configured to store a computer program or instructions and/or data. The processor 910 is configured to execute the computer program or the instructions and/or the data stored in the memory 920, so that the method in the foregoing method embodiments is performed.

Optionally, as shown in FIG. 9, the apparatus 900 may further include a transceiver 930. The transceiver 930 is configured to receive and/or send a signal. For example, the processor 910 is configured to control the transceiver 930 to receive and/or send a signal.

The processor 910 in FIG. 9 may be the processing unit 820 in FIG. 8, and implement a function of the processing unit 820. For details about an operation performed by the processor 910, refer to the foregoing descriptions of the processing unit 820. Details are not described herein again. The transceiver 930 in FIG. 9 may be the transceiver unit 810 in FIG. 8, and implement a function of the transceiver unit 810. For details about an operation performed by the transceiver 930, refer to the foregoing descriptions of the transceiver unit 810. Details are not described herein again. The memory 920 in FIG. 9 may be the storage unit 830 in FIG. 8, and implement a function of the storage unit 830.

Optionally, the apparatus 900 includes one or more processors 910.

Optionally, the memory 920 and the processor 910 may be integrated together or separately disposed.

In a solution, the apparatus 900 is configured to implement an operation performed by a device (for example, the foregoing receive device or transmit device) in the foregoing method embodiments.

An embodiment of this application further provides a computer-readable storage medium. The computer-readable storage medium stores computer instructions for implementing the method performed by a device (for example, the foregoing receive device or transmit device) in the foregoing method embodiments.

For example, when the computer program is executed by a computer, the computer is enabled to implement the method performed by the transmit device in the foregoing method embodiments.

An embodiment of this application further provides a computer program product including instructions. When the instructions are executed by a computer, the computer is enabled to implement the method performed by a device (for example, the foregoing receive device or transmit device) in the foregoing method embodiments.

An embodiment of this application further provides a communication system. The communication system includes a device (for example, the foregoing receive device or transmit device) in the foregoing embodiments.

An embodiment of this application further provides a chip apparatus, including a processing circuit. The processing circuit is configured to: invoke a program from a memory and run the program, to enable a communication device in which the chip apparatus is installed to implement the method performed by a device (for example, the foregoing receive device or transmit device) in the foregoing method embodiments.

For explanations and beneficial effects of related content in any one of the apparatuses provided above, refer to the corresponding method embodiment provided above. Details are not described herein again.

It should be understood that, the processor mentioned in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA, another programmable logic device, a discrete gate or a transistor logic device, or a discrete hardware component, the memory (storage module) may be integrated into the processor.

It should be further noted that the memory described herein is intended to include, but is not limited to, these and any other appropriate type of memory.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions in embodiments of this application are generated. The computer may be a general-purpose computer, a dedicated computer, a computer network, or another programmable apparatus. For example, the computer may be a personal computer, a server, a transmit device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining K first OOK symbols and K second OOK symbols, wherein each of the K first OOK symbols and the K second OOK symbols is represented by S elements, the K first OOK symbols comprise K×S elements, and the K second OOK symbols comprise K×S elements; and
   2K symbols composed of the K first OOK symbols and the K second OOK symbols comprise at least two OOK symbols ON, one of the two OOK symbols ON is represented by a first ZC sequence, the other of the two OOK symbols ON is represented by a second ZC sequence, and the first ZC sequence is different from the second ZC sequence;
   performing N-point discrete Fourier transform DFT on the K×S elements comprised in the K first OOK symbols, to obtain N DFT-transformed first elements, wherein N=K×S;
   mapping the N DFT-transformed first elements to N frequency-domain subcarriers, to obtain a first frequency-domain signal mapped to the frequency-domain subcarriers;
   performing M-point inverse fast Fourier transform IFFT on the first frequency-domain signal, to obtain an IFFT-transformed first orthogonal frequency division multiplexing OFDM symbol, wherein M≥N;
   sending the first OFDM symbol;
   performing N-point DFT on the K×S elements comprised in the K second OOK symbols, to obtain N DFT-transformed second elements;
   mapping the N DFT-transformed second elements to N frequency-domain subcarriers, to obtain a second frequency-domain signal mapped to the frequency-domain subcarriers;
   performing M-point IFFT on the second frequency-domain signal, to obtain an IFFT-transformed second OFDM symbol; and
   sending the second OFDM symbol.

2. The method according to claim 1, wherein

   the two OOK symbols ON are respectively carried in the first OFDM symbol and the second OFDM symbol; or
   the two OOK symbols ON are carried in the first OFDM symbol.

3. The method according to claim 1 or 2, wherein that the first ZC sequence is different from the second ZC sequence comprises:

   the first ZC sequence and the second ZC sequence have different root indexes; or
   the first ZC sequence and the second ZC sequence have a same root index but different cyclic shifts.

4. The method according to claim 3, wherein the first ZC sequence and the second ZC sequence have the same root index but different cyclic shifts, and the root index is equal to 1.

5. The method according to any one of claims 1 to 4, wherein first Nzc elements in the first ZC sequence are a ZC sequence whose root index is u, and last (S-Nzc) elements in the first ZC sequence are first (S-Nzc) elements in the ZC sequence whose root index is u, wherein Nzc is a length of the ZC sequence whose root index is u, and Nzc<S.

6. The method according to any one of claims 1 to 4, wherein the first ZC sequence is first S elements in a ZC sequence whose root index is u, wherein a length of the ZC sequence whose root index is u is Nzc, and Nzc>S.

7. A communication method, comprising:

   determining K OOK symbols, wherein each of the K OOK symbols is represented by S same elements; and
   the K modulated symbols comprise T OOK symbols ON, the K OOK symbols comprise K×S elements, and the T OOK symbols ON comprise T×S elements;

multiplying an $i^{th}$ element in the T×S elements by $e^{j\alpha_i}$, to obtain K×S elements through multiplication, wherein $1\leq i\leq$T×S, $\alpha_i$ represents a phase, a value of $\alpha_i$ belongs to a set {P1, P2, ..., PL}, and L is a quantity of phases in the set;

performing N-point discrete Fourier transform DFT on the K×S elements obtained through multiplication, to obtain N DFT-transformed elements, wherein N=K×S;

mapping the N DFT-transformed elements to N frequency-domain subcarriers, to obtain a signal mapped to the frequency-domain subcarriers;

performing M-point IFFT on the signal mapped to the frequency-domain subcarriers, to obtain an IFFT-transformed OFDM symbol, wherein M≥N; and sending the IFFT-transformed OFDM symbol.

8. The method according to claim 7, wherein in the set {P1, P2, ..., PL}, Pz=2π×(z-1)/L+c, wherein c is a fixed phase value, z is an integer, and 1≤z≤L.

9. The method according to claim 8, wherein the set {P1, P2, ..., PL} corresponds to a phase set corresponding to phase shift keying PSK constellation points; or the set {P1, P2, ..., PL} corresponds to phases {+π/4, +3π/4, +5π/4, +7π/4} of quadrature amplitude modulation QAM constellation points.

10. A communication method, comprising:

determining, by a first apparatus, K first OOK symbols and K second OOK symbols, wherein each of the K first OOK symbols and the K second OOK symbols is represented by S elements, the K first OOK symbols comprise K×S elements, and the K second OOK symbols comprise K×S elements; and

2K symbols composed of the K first OOK symbols and the K second OOK symbols comprise at least two OOK symbols ON, one of the two OOK symbols ON is represented by a first ZC sequence, the other of the two OOK symbols ON is represented by a second ZC sequence, and the first ZC sequence is different from the second ZC sequence;

determining, by the first apparatus, to perform N-point discrete Fourier transform DFT on the K×S elements comprised in the K first OOK symbols, to obtain N DFT-transformed first elements, wherein N=K×S;

determining, by the first apparatus, to map the N DFT-transformed first elements to N frequency-domain subcarriers, to obtain a first frequency-domain signal mapped to the frequency-domain subcarriers;

determining, by the first apparatus, to perform M-point inverse fast Fourier transform IFFT on the first frequency-domain signal, to obtain an IFFT-transformed first orthogonal frequency division multiplexing OFDM symbol, wherein M≥N;

sending, by the first apparatus, the first OFDM symbol to a second apparatus;

performing, by the first apparatus, N-point discrete Fourier transform DFT on the K×S elements comprised in the K second OOK symbols, to obtain N DFT-transformed second elements;

mapping, by the first apparatus, the N DFT-transformed second elements to N frequency-domain subcarriers, to obtain a second frequency-domain signal mapped to the frequency-domain subcarriers;

performing, by the first apparatus, M-point IFFT on the second frequency-domain signal, to obtain an IFFT-transformed second OFDM symbol;

sending, by the first apparatus, the second OFDM symbol to the second apparatus; and

receiving, by the second apparatus, the first OFDM symbol and the second OFDM symbol.

11. The method according to claim 10, wherein

the two OOK symbols ON are respectively carried in the first OFDM symbol and the second OFDM symbol; or the two OOK symbols ON are carried in the first OFDM symbol.

12. The method according to claim 10 or 11, wherein that the first ZC sequence is different from the second ZC sequence comprises:

the first ZC sequence and the second ZC sequence have different root indexes; or the first ZC sequence and the second ZC sequence have a same root index but different cyclic shifts.

13. The method according to claim 12, wherein the first ZC sequence and the second ZC sequence have the same root index but different cyclic shifts, and the root index is equal to 1.

14. The method according to any one of claims 10 to 13, wherein first Nzc elements in the first ZC sequence are a ZC sequence whose root index is u, and last (S-Nzc) elements in the first ZC sequence are first (S-Nzc) elements in the ZC sequence whose root index is u, wherein Nzc is a length of the ZC sequence whose root index is u, and Nzc<S.

15. The method according to any one of claims 10 to 14, wherein the first ZC sequence is first S elements in a ZC sequence whose root index is u, wherein a length of the ZC sequence whose root index is u is Nzc, and Nzc>S.

16. A communication method, comprising:

   determining, by a first apparatus, K OOK symbols, wherein each of the K OOK symbols is represented by S same elements; and
   the K modulated symbols comprise T OOK symbols ON, the K OOK symbols comprise K×S elements, and the T OOK symbols ON comprise T×S elements;
   multiplying, by the first apparatus, an $i^{th}$ element in the T×S elements by $e^{j\alpha_i}$, to obtain K×S elements through multiplication, wherein
   $1 \leq i \leq T \times S$, $\alpha_i$ represents a phase, a value of $\alpha_i$ belongs to a set {P1, P2, ..., PL}, and L is a quantity of phases in the set;
   performing, by the first apparatus, N-point discrete Fourier transform DFT on the K×S elements obtained through multiplication, to obtain N DFT-transformed elements, wherein N=K×S;
   mapping, by the first apparatus, the N DFT-transformed elements to N frequency-domain subcarriers, to obtain a signal mapped to the frequency-domain subcarriers;
   performing, by the first apparatus, M-point inverse fast Fourier transform IFFT on the signal mapped to the frequency-domain subcarriers, to obtain an IFFT-transformed OFDM symbol, wherein $M \geq N$;
   sending, by the first apparatus, the OFDM symbol to a second apparatus; and
   receiving, by the second apparatus, the OFDM symbol.

17. The method according to claim 16, wherein in the set {P1, P2, ..., PL}, Pz=$2\pi \times$(z-1)/L+c, wherein c is a fixed phase value, z is an integer, and $1 \leq z \leq L$.

18. The method according to claim 17, wherein the set {P1, P2, ..., PL} corresponds to a phase set corresponding to phase shift keying PSK constellation points; or the set {P1, P2, ..., PL} corresponds to phases {$+\pi/4, +3\pi/4, +5\pi/4, +7\pi/4$} of quadrature amplitude modulation QAM constellation points.

19. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 6.

20. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 7 to 9.

21. A computer-readable storage medium, wherein the computer-readable storage medium stores a computer program, and when the computer program is run on a computer, the computer is enabled to perform the method according to any one of claims 1 to 6.

22. A computer-readable storage medium, wherein the computer-readable storage medium stores a computer program, and when the computer program is run on a computer, the computer is enabled to perform the method according to any one of claims 7 to 9.

23. A computer program product, wherein the computer program product comprises computer program code, and when the computer program code is run on a computer, the method according to any one of claims 1 to 6 is performed.

24. A computer program product, wherein the computer program product comprises computer program code, and when the computer program code is run on a computer, the method according to any one of claims 7 to 9 is performed.

25. A chip system, comprising a processor, configured to: invoke a computer program from a memory and run the computer program, to enable a communication device on which the chip system is installed to perform the method according to any one of claims 1 to 6.

26. A chip system, comprising a processor, configured to: invoke a computer program from a memory and run the computer program, to enable a communication device on which the chip system is installed to perform the method according to any one of claims 7 to 9.

27. A communication system, comprising:

a first apparatus and a second apparatus, wherein
the first apparatus is configured to:

determine K first OOK symbols and K second OOK symbols, wherein each of the K first OOK symbols and the K second OOK symbols is represented by S elements, the K first OOK symbols comprise K×S elements, and the K second OOK symbols comprise K×S elements; and
2K symbols composed of the K first OOK symbols and the K second OOK symbols comprise at least two OOK symbols ON, one of the two OOK symbols ON is represented by a first ZC sequence, the other of the two OOK symbols ON is represented by a second ZC sequence, and the first ZC sequence is different from the second ZC sequence;
perform N-point discrete Fourier transform DFT on the K×S elements comprised in the K first OOK symbols, to obtain N DFT-transformed first elements, wherein N=K×S;
map the N DFT-transformed first elements to N frequency-domain subcarriers, to obtain a first frequency-domain signal mapped to the frequency-domain subcarriers;
perform M-point inverse fast Fourier transform IFFT on the first frequency-domain signal, to obtain an IFFT-transformed first orthogonal frequency division multiplexing OFDM symbol, wherein M≥N; and
send the first OFDM symbol to the second apparatus;
the second apparatus is configured to:

receive the first OFDM symbol;
the first apparatus is further configured to:

perform N-point DFT on the K×S elements comprised in the K second OOK symbols, to obtain N DFT-transformed second elements;
map the N DFT-transformed second elements to N frequency-domain subcarriers, to obtain a second frequency-domain signal mapped to the frequency-domain subcarriers;
perform M-point IFFT on the second frequency-domain signal, to obtain an IFFT-transformed second OFDM symbol; and
send the second OFDM symbol to the second apparatus; and
the second apparatus is further configured to:
receive the second OFDM symbol.

28. The system according to claim 27, wherein

the two OOK symbols ON are respectively carried in the first OFDM symbol and the second OFDM symbol; or
the two OOK symbols ON are carried in the first OFDM symbol.

29. The system according to claim 27 or 28, wherein that the first ZC sequence is different from the second ZC sequence comprises:

the first ZC sequence and the second ZC sequence have different root indexes; or
the first ZC sequence and the second ZC sequence have a same root index but different cyclic shifts.

30. The system according to claim 29, wherein the first ZC sequence and the second ZC sequence have the same root index but different cyclic shifts, and the root index is equal to 1.

31. The system according to any one of claims 27 to 30, wherein first Nzc elements in the first ZC sequence are a ZC sequence whose root index is u, and last (S-Nzc) elements in the first ZC sequence are first (S-Nzc) elements in the ZC sequence whose root index is u, wherein Nzc is a length of the ZC sequence whose root index is u, and Nzc<S.

32. The system according to any one of claims 27 to 31, wherein the first ZC sequence is first S elements in a ZC sequence whose root index is u, wherein a length of the ZC sequence whose root index is u is Nzc, and Nzc>S.

33. A communication system, comprising:

a first apparatus and a second apparatus, wherein
the first apparatus is configured to:

determine K OOK symbols, wherein each of the K OOK symbols is represented by S same elements; and the K modulated symbols comprise T OOK symbols ON, the K OOK symbols comprise K×S elements, and the T OOK symbols ON comprise T×S elements;
multiply an ith element in the T×S elements by $e^{j\alpha i}$, to obtain K×S elements through multiplication, wherein $1\leq i\leq T\times S$, $\alpha_i$ represents a phase, a value of $\alpha_i$ belongs to a set {P1, P2, ..., PL}, and L is a quantity of phases in the set;
perform N-point discrete Fourier transform DFT on the K×S elements obtained through multiplication, to obtain N DFT-transformed elements, wherein N=K×S;
map the N DFT-transformed elements to N frequency-domain subcarriers, to obtain a signal mapped to the frequency-domain subcarriers;
perform M-point inverse fast Fourier transform IFFT on the signal mapped to the frequency-domain subcarriers, to obtain an IFFT-transformed OFDM symbol, wherein M≥N; and
send the OFDM symbol to the second apparatus; and
the second apparatus is configured to:
receive the OFDM symbol.

34. The system according to claim 33, wherein in the set {P1, P2, ..., PL}, Pz=2π×(z-1)/L+c, wherein c is a fixed phase value, z is an integer, and 1≤z≤L.

35. The system according to claim 34, wherein the set {P1, P2, ..., PL} corresponds to a phase set corresponding to phase shift keying PSK constellation points; or the set {P1, P2, ..., PL} corresponds to phases {+π/4, +3π/4, +5π/4, +7π/4} of quadrature amplitude modulation QAM constellation points.

[FIG. 1]

[FIG. 2]

Data → N-point DFT → Mapping to frequency-domain subcarriers → M-point IFFT → Add a cyclic prefix → Send

IFFT

66.7 μs

Add a CP

4.7 μs | 66.7 μs

OFDM symbol

[FIG. 3]

S301　　　　　S302　　　　　S303　　　　　S304　　　　　S305　　　　　S306

| OOK symbol | → | Phase weighting | → | N-point DFT | → | Mapping to frequency-domain subcarriers | → | M-point IFFT | → | OFDM symbol | → Send |

OOK symbol ON

1, 1, 1, ..., 1

←——————————→

S 1s

OOK symbol OFF

0, 0, 0, ..., 0

←——————————→

S 0s

EP 4 648 365 A1

[FIG. 4]

S401

Determine K first OOK symbols and K second OOK symbols

First OOK symbols — S402

Mapping to a ZC sequence

S403

N-point DFT

S404

M-point IFFT

S405

First OFDM symbol

Send

Second OOK symbols — S406

Mapping to a ZC sequence

S407

N-point DFT

S408

M-point IFFT

S409

Second OFDM symbol

Send

[FIG. 5]

| First OFDM symbol | | Second OFDM symbol | |

Time domain

[FIG. 6]

S601

Determine K OOK symbols

S602

Mapping to a ZC sequence whose root index is 1

S603

N-point DFT

S604

M-point IFFT

S605

OFDM symbol

Send

[FIG. 7]

S701 — OOK symbol → S702 — N-point DFT → S703 — Mapping to frequency-domain subcarriers → S704 — M-point IFFT M=N → S705 — OFDM symbol → Send

OOK symbol ON — 1, 1, 1, ..., 1 — $S^{-}$ 1s

OOK symbol OFF — 0, 0, 0, ..., 0 — S 0s

EP 4 648 365 A1

[FIG. 8]

[FIG. 9]

## INTERNATIONAL SEARCH REPORT

| International application No. |
| --- |
| **PCT/CN2024/070213** |

### A.  CLASSIFICATION OF SUBJECT MATTER

H04L 27/04(2006.01)i

According to International Patent Classification (IPC) or to both national classification and IPC

### B.  FIELDS SEARCHED

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, CNKI, DWPI, ENTXT, ENTXTC, VEN, 3GPP: 不同, ZC, 序列, OOK, 符号, OFDM, 发送, 调制, different, sequence, symbol, transmission, modulation

### C.  DOCUMENTS CONSIDERED TO BE RELEVANT

| Category* | Citation of document, with indication, where appropriate, of the relevant passages | Relevant to claim No. |
| --- | --- | --- |
| Y | US 2020127756 A1 (PANASONIC INTELLECTUAL PROPERTY CORPORATION OF AMERICA) 23 April 2020 (2020-04-23) description, paragraphs [0010]-[0099], and claims 1-12, and figures 1-25 | 1-35 |
| Y | US 2019036746 A1 (LG ELECTRONICS INC.) 31 January 2019 (2019-01-31) description, paragraphs [0114]-[0346], and figures 1-40 | 1-35 |
| A | US 10129064 B1 (NEWRACOM, INC.) 13 November 2018 (2018-11-13) entire document | 1-35 |
| A | WO 2014112835 A1 (LG ELECTRONICS INC.) 24 July 2014 (2014-07-24) entire document | 1-35 |
| A | CATT. "Short PUCCH for small UCI payloads" *3GPP TSG RAN WG1 NR Ad-Hoc#2 R1- 1710083*, 30 June 2017 (2017-06-30), entire document | 1-35 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 February 2024** | **06 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/070213**

| Patent document cited in search report | | | Publication date (day/month/year) | Patent family member(s) | | | Publication date (day/month/year) |
|---|---|---|---|---|---|---|---|
| US | 2020127756 | A1 | 23 April 2020 | JPWO | 2019008916 | A1 | 07 May 2020 |
| | | | | WO | 2019008916 | A1 | 10 January 2019 |
| US | 2019036746 | A1 | 31 January 2019 | WO | 2017135693 | A1 | 10 August 2017 |
| | | | | US | 2021044463 | A1 | 11 February 2021 |
| | | | | EP | 3413495 | A1 | 12 December 2018 |
| | | | | US | 2022329468 | A1 | 13 October 2022 |
| US | 10129064 | B1 | 13 November 2018 | US | 2019036754 | A1 | 31 January 2019 |
| | | | | US | 2020007373 | A1 | 02 January 2020 |
| WO | 2014112835 | A1 | 24 July 2014 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202310201145 A